# EUROPÄISCHE PATENTSCHRIFT

(11) **EP 3 912 448 B1**
(45) Veröffentlichungstag und Bekanntmachung des Hinweises auf die Patenterteilung: **22.06.2022**
(21) Anmeldenummer: 21000136.8
(22) Anmeldetag: 14.05.2021
(51) Int. Cl.: A01C 23/00, A01M 7/00

(54) **GESTÄNGE FÜR SCHLEPPSCHUH- ODER SCHLEPPSCHLAUCH-ANORDNUNG ZUR GÜLLEAUSBRINGUNG**
BOOM FOR A TRAILING SHOE OR TRAILING HOSE ASSEMBLY FOR DISPENSING MANURE
TIGE POUR AGENCEMENT DE SABOT TRAÎNÉ OU DE TUYAU TRAÎNÉ DESTINÉ À L'ÉPANDAGE DE FUMIER

(30) Priorität: 18.05.2020 DE 202020002171 U; 18.08.2020 DE 202020003530 U
(43) Veröffentlichungstag der Anmeldung: 24.11.2021
(73) Patentinhaber: Mößmer, Helmut, 89294 Oberroth (DE)
(72) Erfinder: Mößmer, Helmut, 89294 Oberroth (DE)
(74) Vertreter: Gallo, Wolfgang

(56) Entgegenhaltungen:
- DE-A1- 10 235 115
- DE-A1-102008 013 994
- DE-C2- 19 640 037
- US-A1- 2019 357 519

## Beschreibung

Die Erfindung betrifft ein Gestänge für eine Schleppschuh- oder Schleppschlauch-Anordnung zur Gülleausbringung.

Umweltfreundliche Gülle-Ausbringungstechnik arbeitet mit Schleppschuh- oder Schleppschlauch-Gülleverteilern, die am Güllefasswagen angebaut sind. Die Verteiler haben ein klappbares und manchmal auch faltbares Gestänge, das zur Straßenfahrt einklappbar ist und zum Ausbringen der Gülle ausgeklappt werden kann.

An dem Gestänge ist eine Mehrzahl von über die Verteilbreite, also die Gestängebreite verteilt nebeneinander angeordneten Schläuchen angeordnet, die als Schleppschläuche ausgebildet oder bei einem Schleppschuh jeweils mit einer Kufe verbunden sind. Die Schläuche sind über einen Verteiler mit einem Auslassrohr des Güllefasses des Fasswagens verbunden. Bei Schleppschuhen werden mit Federstäben die Kufen mit dem jeweils daran angeordneten und am Boden ausmündenden Schlauch auf den Boden gedrückt, so dass die Gülle direkt am Boden ausgebracht wird, wodurch Emissionen gemindert werden.

Die Veröffentlichungen DE 10 2008 013994 A1, DE 196 40 037 C2 und DE 102 35 115 A1 offenbaren Gestänge nach den Oberbegriffen der unabhängigen Ansprüche 1 und 2.

Da man bestrebt ist, möglichst große Verteilbreiten zu erreichen, sind entsprechend breite Gestänge erforderlich, die weit ausladen. Bei bekannten Schleppschuhgestängen sind die Tragarme der aus klappbaren Auslegerteile als Stahlkonstruktion ausgeführt, da sie eine entsprechende Festigkeit haben müssen und deshalb auch entsprechend stabil ausgeführt werden müssen, was wiederum ein entsprechend hohes Gewicht mit sich bringt.

Ein großes Gewicht des Gestänges bedeutet aber nicht nur eine Beschränkung der möglichen Gestängebreite und somit der möglichen Verteilbreite, sondern wirkt sich wegen der Anordnung am hinteren Ende des Güllefasswagens auch nachteilig auf den Güllefasswagen aus, da das Gewicht den Güllefasswagen nach hinten zu kippen sucht, und beschränkt insbesondere bei kleineren Güllefasswagen die mögliche Schleppschuhgröße deutlich. Aufgabe der Erfindung ist es daher, ein Gestänge zu schaffen, bei welchem das Gewicht im Verhältnis zur Verteilbreite deutlich verringert ist.

Diese Aufgabe wird gemäß der Erfindung durch die im Anspruch 1 oder Anspruch 2 angegebene Anordnung gelöst.

Dementsprechend sieht die Erfindung vor, die Tragbalken der ausklappbaren Auslegerteile des Gestänges als Kunststoffrohre auszubilden. Diese sind zwar mit ihrem Durchmesser dicker als ein entsprechender metallener Tragbalken herkömmlicher Schleppschuhgestänge, haben aber nur einen Bruchteil des Gewichts eines metallenen Tragbalkens bei gleicher Festigkeit und Steifigkeit.

Bei weit ausladendem Gestänge, kann der Tragbalken im Bereich eines inneren, also am Güllefasswagen angelenkten Auslegerabschnitts aus einem Kunststoffrohr größeren Durchmessers und im Bereich eines äußeren Auslegerabschnitts aus einem Kunststoffrohr kleineren Durchmessers bestehen, um den unterschiedlichen Belastungen Rechnung zu tragen. Das gilt insbesondere auch, wenn der Auslegerarm faltbar ist, also der äußere Auslegeabschnitt auf den inneren Auslegerabschnitt gefaltet werden kann, wenn das Auslegerteil in die Transportstellung gebracht wird.

Die Erfindung wird nachstehend unter Bezugnahme auf die anliegenden Zeichnungen anhand von Ausführungsbeispielen mehr im einzelnen erläutert. In den Zeichnungen zeigt:
- Fig. 1: einen Güllefasswagen mit einem Schleppschuhverteiler mit einem Gestänge nach der Erfindung in der Arbeitsstellung in der Ansicht von oben,
- Fig. 2: den Güllefasswagen mit dem Schleppschuhverteiler in der Arbeitsstellung in der Ansicht von hinten,
- Fig. 3: den Güllefasswagen mit dem ausgeklappten Schleppschuhverteiler in vom Boden angehobener Stellung,
- Fig. 4: den Güllefasswagen mit in die Transportstellung eingeklapptem Schleppschuhverteiler in Seitenansicht,
- Fig. 5: den Güllefasswagen mit in die Transportstellung eingeklapptem Schleppschuhverteiler in der Ansicht von hinten,
- Fig.6: ein Auslegerteil des Schleppschuhverteilers in Ansicht von hinten,
- Fig. 7: einen Schnitt durch das Auslegerteil entlang der Schnittlinie VII-VII in Fig. 6, und
- Fig. 8: einen Schnitt durch ein Tragbalken-Kunststoffrohr des erfindungsgemäßen Gestänges nach einem alternativen Ausführungsbeispiel.

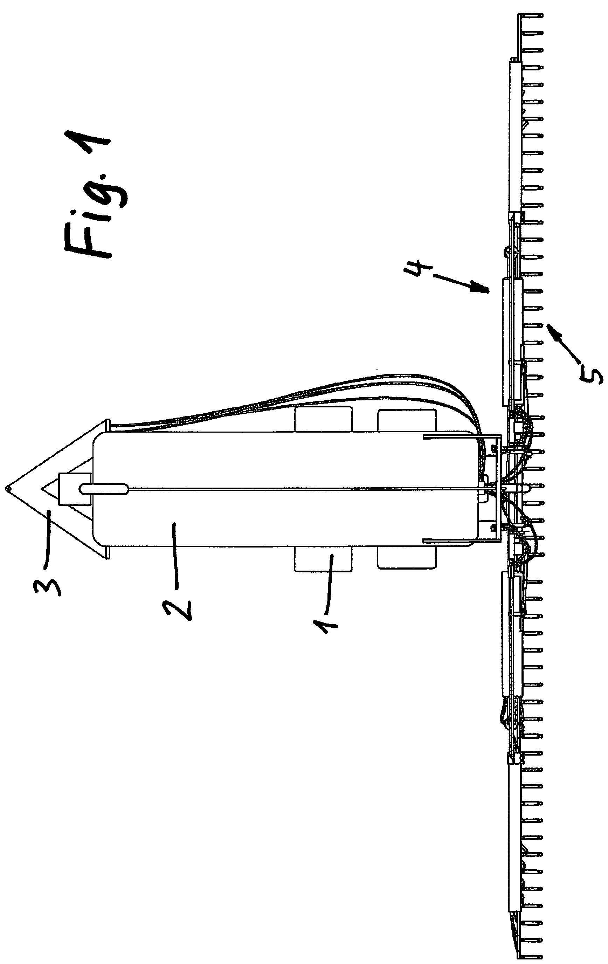

Die Zeichnungen nach den Fig. 1 bis 5 zeigen jeweils einen Güllefasswagen mit einem Schleppschuhverteiler mit einem Gestänge nach der Erfindung. Obwohl das Ausführungsbeispiel in Verbindung mit einem Schleppschuhverteiler dargestellt ist, versteht es sich, dass das Gestänge in derselben Weise in Verbindung mit einem Schleppschlauchverteiler eingesetzt werden kann.

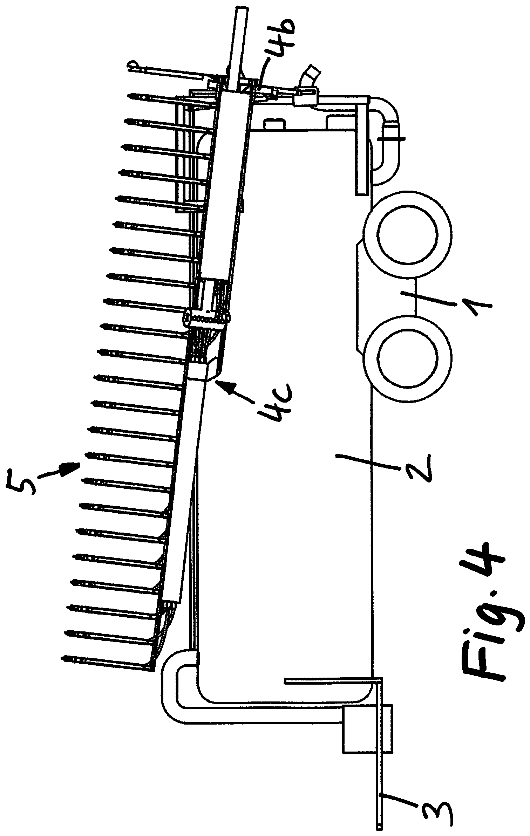

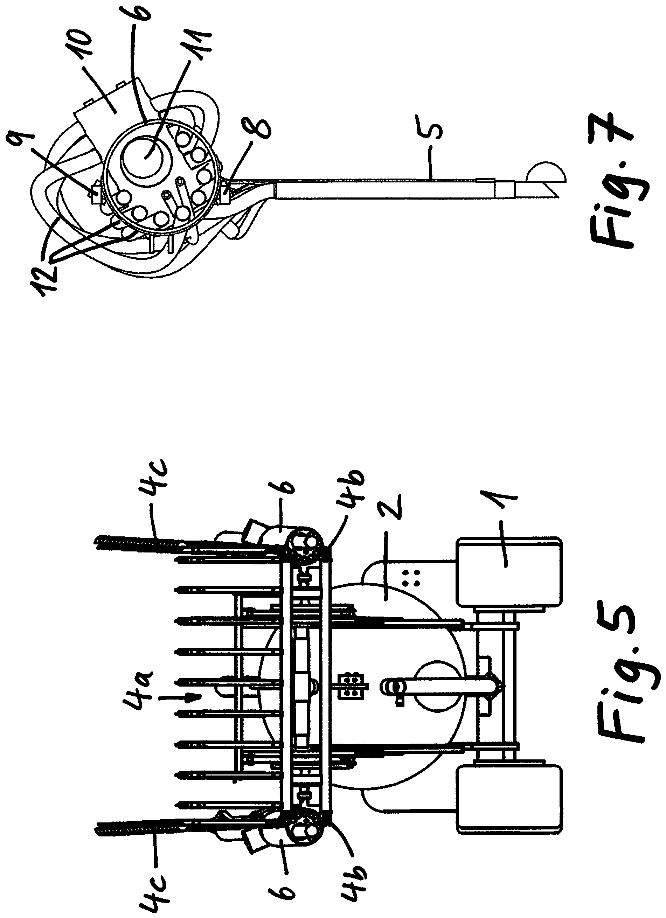

In der Draufsicht nach Figur 1 und der Seitenansicht nach Figur 4 erkennt man den Güllefasswagen mit einem zweiachsigen Fahrgestell 1, einem Güllefass-Aufbau 2 und einer Zugdeichsel 3. Am hinteren Ende des Güllefasswagens ist ein Schleppschuhverteiler angebaut, der in den Figuren 1 bis 3 in ausgeklappter Position und in den Figuren 4 und 5 in eingeklappter Position sichtbar ist.

Der Schleppschuhverteiler hat, wie man aus den Figuren 1 bis 3 deutlich ersehen kann, ein in der ausgeklappten Arbeitsposition beiderseits weit ausladendes Gestänge 4 mit einer Vielzahl von daran angeordneten, etwas rückwärts und abwärts zum Boden verlaufenden, jeweils mit einem Schlauch kombinierten Kufen 5, die über die gesamte Breite des Gestänges in gleichmäßigen Abständen am Gestänge 4 angeordnet sind.

Das Gestänge 4 besteht, wie man am besten aus der Ansicht von hinten in Figur 5 in der eingeklappten Fahrposition erkennen kann, aus einem am Güllefassaufbau 2 hinten angebauten Mittelteil 4a und zwei jeweils daran über ein Scharniergelenk 4b angelenkten aus- und einklappbaren Auslegerteilen 4c.

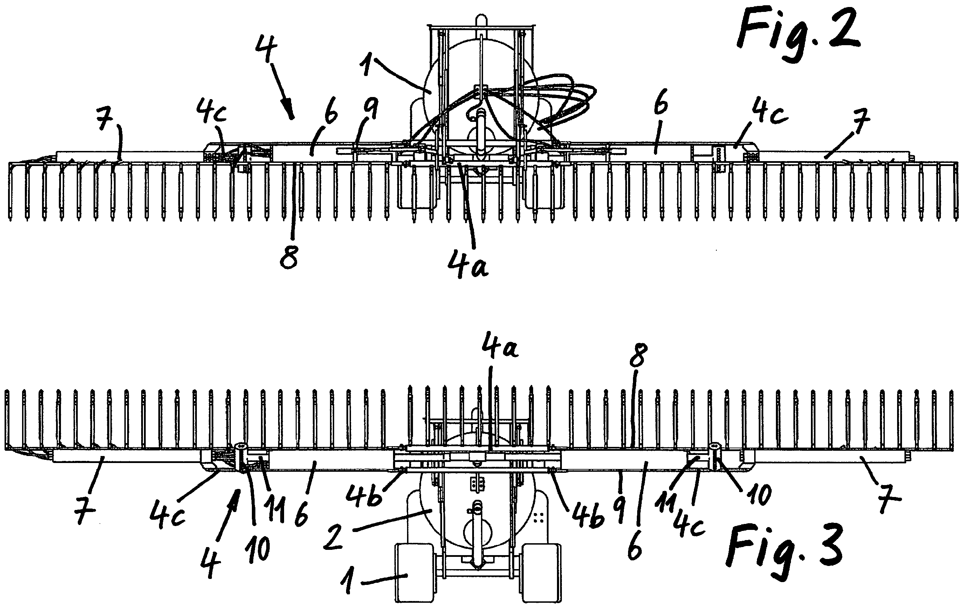

Das Mittelteil 4a ist zwischen einer abgesenkten Arbeitsstellung, in welcher die Kufen 5 auf den Boden aufsitzen, wie in Figur 2 dargestellt ist, und einer angehobenen Stellung bewegbar, die in den Figuren 3 und 5 dargestellt ist. Die angehobene Stellung mit eingeklappten Auslegerteilen 4c, wie in Figur 5 dargestellt, bildet die Transportstellung für Straßenfahrt, während die in Figur 3 dargestellte angehobene Stellung mit ausgeklappten Auslegerteilen 4c beispielsweise beim Wenden auf dem Acker benutzt wird.

Erfindungsgemäß sind die Tragbalken der Auslegerteile 4c des Schleppschuhgestänges in Leichtbauweise ausgeführt, indem sie nicht komplett aus Metall, nämlich Stahl, hergestellt sind, wie das bei herkömmlichen Schleppschuhverteilern der Fall ist. Vielmehr bestehen bei den Auslegerteilen 4c des erfindungsgemäßen Schleppschuhgestänges tragende Strukturen aus Kunststoff, nämlich aus Kunststoffrohren 6, 7.

Jedes Auslegerteil 4c weist einen Tragbalken auf, der in einem ersten, vom Scharniergelenk 4b ausgehenden Abschnitt durch ein Kunststoffrohr 6 größeren Durchmessers und in einem sich daran anschließenden äußeren Abschnitt durch ein Kunststoffrohr 7 kleineren Durchmessers als tragendes Element gebildet ist. Die beiden Kunststoffrohre 6 und 7 jedes Tragbalkens sind mit metallenen Streben 8 und 9 miteinander verbunden, die außen an den Kunststoffrohren befestigt sind. Diese metallenen Streben 8 und 9 verstärken das Kunststoffrohr 6 größeren Durchmessers und verbinden dieses mit dem Scharniergelenk 4b, und verbinden auch die beiden Kunststoffrohre 6 und 7 miteinander. Die obere Strebe 9 bildet einen Zuggurt, und an der unteren Strebe 8 sind auch die Kufen 6 mit den Endabschnitten der Schläuche angeordnet.

In einer zwischen den beiden Kunststoffrohren 6 und 7 gebildeten Lücke ist ein Verteiler 10 eingebaut, der über ein durch das Kunststoffrohr 6 größeren Durchmessers verlaufendes Zuleitungsrohr 11 mit dem Güllefass verbunden ist und zugeführte Gülle auf die einzelnen Schläuche der Kufen 6 verteilt. Ein Teil der zu den Kufen 5 führenden Schläuche verläuft ebenfalls durch die Kunststoffrohre 6 und 7.

Das Kunststoffrohr 7 kann einen kleineren Durchmesser haben als das Kunststoffrohr 6, weil natürlich im äußeren Abschnitt des Tragbalkens nur eine geringere Belastung vorhanden ist und deshalb eine geringere Tragfähigkeit genügt. Jedoch kann selbstverständlich, abweichend von dem dargestellten Ausführungsbeispiel, der Tragbalken des Auslegerteils auch mit nur einem ich durchgehenden Kunststoffrohr als tragende Struktur ausgebildet sein.

Ebenso ist es natürlich möglich, abweichend vom dargestellten Ausführungsbeispiel die Auslegerteile 4c mit einem sich an das Scharniergelenk 4b anschließenden inneren Abschnitt und einem sich daran anschließenden äußeren Abschnitt auszuführen, wobei der innere Abschnitt und der äußere Abschnitt durch ein Scharniergelenk miteinander verbunden und aufeinander faltbar sind. Dann kann ebenso wie beim dargestellten Ausführungsbeispiel der innere Abschnitt mit einem Kunststoffrohr größeren Durchmessers und der äußere Abschnitt mit einem Kunststoffrohr kleineren Durchmessers als tragendes Bauteil ausgeführt sein.

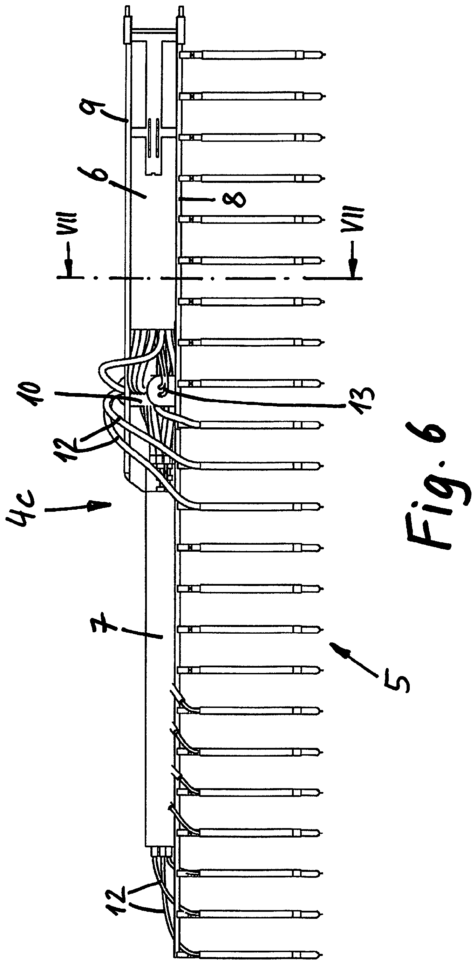

Die Fig. 6 und 7 zeigen den Aufbau eines Auslegerteils des Schleppschuhverteiler-Gestänges nach dem ersten Ausführungsbeispiel in größerer Darstellung, da dessen Einzelheiten in den Fig. 2 und 3 nicht so gut erkennbar sind. Dabei zeigt Fig. 6 das linke Auslegerteil des Schleppschuhverteiler-Gestänges in der Rückansicht, und Fig. 7 zeigt einen Schnitt längs der Schnittlinie VII-VII in Fig. 6 in noch etwas größerer Darstellung.

In Fig. 6 erkennt man deutlicher die Kunststoffrohre 6 und 7 als tragende Elemente des Tragbalkens zusammen mit einer oberen metallenen Strebe 9 und eine unteren metallenen Strebe 8, an welcher die Kufen 5 angeordnet sind, sowie auch den zwischen den beiden Kunststoffrohren 6 und 7 angeordneten Verteiler 10 mit den davon abgehenden Schläuchen 12, die zu den Kufen 5 und entlang derselben bis zum Boden führen.

Wie man in Fig. 6 auch deutlich erkennt, verlaufen die Schläuche 12 teilweise innerhalb der Kunststoffrohre 6 und 7 und teils außerhalb dieser Kunststoffrohre zu den jeweiligen Kufen 5 und entlang derselben bis zum Boden. Die Kunststoffrohre ermöglichen mit ihren Rohrinnenräumen eine Führung der Schläuche 12, die innerhalb der Kunststoffrohre keiner besonderen Fixierung bedürfen, und die Schläuche sind innerhalb der Rohre auch geschützt. Durch entlang der Kunststoffrohre vorgesehene Durchführungsöffnungen können die Schläuche jeweils zu den zugeordneten Kufen aus dem Rohrinneren herausgeführt werden.

Die Kunststoffrohre können auch ausgeschäumt sein, um die Stabilität und Biegesteifigkeit der Kunststoffrohre noch zu erhöhen. Eine Ausschäumung der Rohrinnenräume bewirkt auch eine Fixierung der Schläuche innerhalb der Rohre und verhindert, dass diese sich relativ zu einander bewegen können, so dass ein mögliches Scheuern der Schläuche aneinander oder an den Rohren verhindert wird.

Die Schnittdarstellung nach Fig. 7 zeigt das Kunststoffrohr 6 größeren Durchmessers im Schnitt und dahinter den Verteiler 10 mit den abgehenden Schläuchen 12, sowie das Zuleitungsrohr 11, das zum Verteiler 10 führt und durch das Kunststoffrohr 6 hindurch verläuft, sowie auch eine Anzahl von Schläuchen 12, die durch das Kunststoffrohr 6 hindurch verlaufen. Das Kunststoffrohr 7 kleineren Durchmessers ist verdeckt und nicht sichtbar.

Im Verteiler 10 befindet sich eine hydraulisch angetriebene Schnecke (nicht sichtbar), welche die durch das Zuleitungsrohr 11 zugeführte Gülle aktiv zu den Schlauchanschlüssen fördert. Zum Antrieb der Schnecke sind in Fig. 6 sichtbare Hydraulikschläuche 13 vorgesehen.

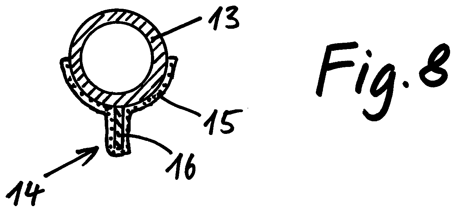

Bei dem vorstehend beschriebenen Ausführungsbeispiel bestehen die Tragbalken aus Kunststoffrohren 6, 7, die mittels metallener Streben verstärkt und miteinander verbunden sind. Fig. 8 zeigt im Querschnitt eine alternative Ausführungsform eines Tragbalkens eines Auslegerteils eines Gestänges nach der Erfindung, wobei der Tragbalken durch ein Kunststoffrohr 13 gebildet ist, das eine daran angeordnete Rippe 14 aus glasfaserverstärktem Kunststoff aufweist. Die Rippe 14 ist dabei aus einer auf sich selbst gefalteten glasfaserverstärkten Kunststoffschicht 15 gebildet, die sich beiderseits der Rippe 14 über einen gewissen Bereich über den Umfang des Kunststoffrohrs 13 erstreckt.

Die Rippe 14 kann einen von der glasfaserverstärkten Kunststoffschicht umschlossenen, also darin eingebetteten Kern in Gestalt eines stehenden Streifens oder Stegs 16 aus Metallblech oder Metallflachband haben, an welchem die Schlittschuhkufen oder Schleppschläuche montiert werden können.

Der die Rippe 14 bildende glasfaserverstärkte Kunststoff kann, wie dargestellt, das Rohr 13 über etwa seinen halben Umfang umgreifen, indem er beiderseits der Rippe 14 sich über etwa ein Viertel des Umfangs des Rohrs erstreckt, kann aber auch das Rohr 13 vollständig umgreifen. Bei dieser Ausführungsform kommt das den Tragbalken bildende Kunststoffrohr 13 ohne weitere verstärkende Metallstreben aus.

## Patentansprüche

1. Gestänge für Schleppschuh- oder Schleppschlauchverteiler zur Gülleausbringung, das an einem Güllefaßwagen anbaubar ist, und das Auslegerteile (4c) aufweist, die zwischen einer zum Güllefaßwagen hin eingeklappten Transportposition und einer seitwärts ausgeklappten Arbeitsposition um ein Scharniergelenk (4b) schwenkbar sind und die jeweils einen Tragbalken (6, 7, 8, 9) und eine Mehrzahl von daran angeordneten Schleppschuhkufen (5) mit jeweils dem Endabschnitt eines zugeordneten Gülleausbringungsschlauchs (12) aufweisen, oder eine Mehrzahl von daran angeordneten Schleppschläuchen aufweisen,
**dadurch gekennzeichnet, dass** der Tragbalken mit einem Kunststoffrohr (6, 7) als tragender Struktur ausgebildet ist, das mit oberen und unteren längs verlaufenden Streben (8, 9) verstärkt und mit dem Scharniergelenk (4b) verbunden ist.

2. Gestänge für Schleppschuh- oder Schleppschlauchverteiler zur Gülleausbringung, das an einem Güllefaßwagen anbaubar ist, und das Auslegerteile (4c) aufweist, die zwischen einer zum Güllefaßwagen hin eingeklappten Transportposition und einer seitwärts ausgeklappten Arbeitsposition um ein Scharniergelenk (4b) schwenkbar sind und die jeweils einen Tragbalken (6, 7, 8, 9) und eine Mehrzahl von daran angeordneten Schleppschuhkufen (5) mit jeweils dem Endabschnitt eines zugeordneten Gülleausbringungsschlauchs (12) aufweisen, oder eine Mehrzahl von daran angeordneten Schleppschläuchen aufweisen,
**dadurch gekennzeichnet, dass** der Tragbalken mit einem Kunststoffrohr (13) als tragender Struktur ausgebildet ist, das im unteren Bereich mit einer längs verlaufenden Rippe (14) aus glasfaserverstärktem Kunststoff verstärkt ist, der in Gestalt einer glasfaserverstärkten Kunststoffschicht (15) zur Bildung der Rippe auf sich selbst gefaltet ist und sich beiderseits der Rippe (14) über einen gewissen Umfangsbereich um das Kunststoffrohr (13) erstreckt.

3. Gestänge nach Anspruch 2, wobei die Schleppschuhkufen oder Schleppschläuche an der Rippe montiert sind.

4. Gestänge nach Anspruch 2 oder 3, wobei sich die Glasfaser verstärkte Kunststoffschicht (15) über mindestens den halben Umfang oder um den gesamten Umfang des Kunststoffrohrs (13) erstreckt.

5. Gestänge nach Anspruch 1, wobei die Schleppschuhkufen (5) oder die Schleppschläuche an der unteren längs verlaufenden Strebe (8, 9) montiert sind.

6. Gestänge nach einem der Ansprüche 1 bis 5, wobei die Gülleausbringungsschläuche (12) mindestens teilweise innerhalb des Kunststoffrohrs (6, 7, 13) verlaufen.

7. Gestänge nach Anspruch 6, wobei die Gülleausbringungsschläuche durch entlang des Kunststoffrohrs (6, 7, 13) angeordnete Durchführungsöffnungen zu der jeweiligen Kufen- oder Schleppschlauchpositionen herausgeführt sind.

8. Gestänge nach einem der Ansprüche 1 bis 7, wobei der Tragbalken in einem sich an das Scharniergelenk (4b) anschließenden Abschnitt ein Kunststoffrohr (6) größeren Durchmessers und in einem sich daran anschließenden äußeren Abschnitt ein Kunststoffrohr (7) kleineren Durchmessers als tragende Struktur aufweist.

9. Gestänge nach einem der Ansprüche 1 bis 8, wobei im Verlauf der Länge des Tragbalkens ein Verteiler (10) angeordnet ist, der mit einer Mehrzahl von Schlauchanschlüssen für die Gülleausbringungsschläuche (12) versehen ist und die durch eine Zuleitung zugeführte Gülle auf die Gülleausbringungsschläuche (12) verteilt.

10. Gestänge nach den Ansprüchen 8 und 9, wobei der Verteiler (10) in einer Lücke zwischen dem Kunststoffrohr (6) größeren Durchmessers und dem Kunststoffrohr (7) kleineren Durchmessers angeordnet ist.

11. Gestänge nach Anspruch 9, wobei ein Zuleitungsrohr (11) zum Verteiler (10) durch das Kunststoffrohr (6) größeren Durchmessers hindurch verläuft.

12. Gestänge nach einem der Ansprüche 8 bis 11, wobei der Tragbalkenabschnitt mit dem Kunststoffrohr (6) größeren Durchmessers und der Tragbalkenabschnitt mit dem Kunststoffrohr (7) kleineren Durchmessers durch ein Scharniergelenk miteinander verbunden und aufeinander faltbar sind.

13. Gestänge nach einem der Ansprüche 1 bis 12, wobei der Rohrinnenraum des oder jedes Kunststoffrohrs mit Kunststoffschaum ausgeschäumt ist.

## Claims

1. A linkage for trailing shoe or trailing hose distributors for the spreading of liquid manure, the linkage being mountable to a liquid manure tank vehicle and having boom portions (4c) that are pivotable around a hinged joint (4b), between a transport position folded in towards the liquid manure tank vehicle and a working position folded out sidewards, and that each have a support beam (6, 7, 8, 9) and disposed thereon either a plurality of trailing shoe skids (5), respectively with an end portion of an associated liquid manure spreading hose (12), or a plurality of trailing hoses,
**characterised in that** the support beam is configured with a plastic tube (6, 7) as the supporting structure, the tube being reinforced with upper and lower, longitudinally extending struts (8, 9) and connected to the hinged joint (4b).

2. A linkage for trailing shoe or trailing hose distributors for the spreading of liquid manure, the linkage being mountable to a liquid manure tank vehicle and having boom portions (4c) that are pivotable around a hinged joint (4b), between a transport position folded in towards the liquid manure tank vehicle and a working position folded out sidewards, and that each have a support beam (6, 7, 8, 9) and disposed thereon either a plurality of trailing shoe skids (5), respectively with an end portion of an associated liquid manure spreading hose (12), or a plurality of trailing hoses,
**characterised in that** the support beam is configured with a plastic tube (13) as the supporting structure, the tube being reinforced in its lower region with a longitudinally extending rib (14) made of glass-fiber reinforced plastic that is folded back onto itself in the shape of a glass-fiber reinforced plastic layer (15) for forming the rib and extends, on both sides of the rib (14), over a certain part of the circumference around the plastic tube (13).

3. The linkage according to claim 2, wherein the trailing shoe skids or the trailing hoses are mounted on the rib.

4. The linkage according to claim 2 or 3, wherein the glass-fiber reinforced plastic layer (15) extends over at least half the circumference or over the whole circumference of the plastic tube (13).

5. The linkage according to claim 1, wherein the trailing shoe skids (5) or the trailing hoses are mounted on the lower longitudinally extending strut (8, 9).

6. The linkage according to any one of claims 1 to 5, wherein the liquid manure spreading hoses (12) run at least in part within the plastic tube (6, 7, 13).

7. The linkage according to claim 6, wherein the liquid manure spreading hoses are led out to the respective skid or trailing hose positions through passage openings disposed along the plastic tube (6, 7, 13).

8. The linkage according to any one of claims 1 to 7, wherein the support beam has, as the supporting structure, a plastic tube (6) with a larger diameter in a portion adjoining to the hinged joint (4b), and in an outer portion adjoining thereto, a plastic tube (7) with a smaller diameter.

9. A linkage according to any one of claims 1 to 8, wherein in the course of the length of the support beam a manifold (10) is arranged that is provided with a plurality of hose connections for the liquid manure spreading hoses (12) and that distributes the liquid manure fed through a feeding line to the liquid manure spreading hoses (12).

10. The linkage according to claims 8 and 9, wherein the manifold (10) is arranged in a gap between the plastic tube (6) with the larger diameter and the plastic tube (7) with the smaller diameter.

11. The linkage according to claim 9, wherein a feeding tube (11) runs to the manifold (10) through the plastic tube (6) with the larger diameter.

12. The linkage according to any one of claims 8 to 11, wherein the portion of the support beam having the plastic tube (6) with the larger diameter and the portion of the support beam having the plastic tube (7) with the smaller diameter are connected to and foldable onto each other by a hinge joint.

13. The linkage according to any one of claims 1 to 12, wherein the interior tube space of the or of each plastic tube is foam filled with a plastic foam.

## Revendications

1. Système de tringlerie pour épandeurs à patins ou à pendillards pour l'épandage de lisier, le système pouvant être monté sur un véhicule tonneau à lisier et présentant deux parties de bras (4c) qui peuvent pivoter autour d'une articulation à charnière (4b) entre une position de transport repliée sur le véhicule tonneau à lisier et une position de travail dépliée vers les côtés, et qui respectivement présentent une poutre porteuse (6, 7, 8, 9) et, disposés sur celle-ci, une pluralité de patins (5), chacun avec la portion terminale d'un tuyau d'épandage de lisier associé (12), ou une pluralité de pendillards,
**caractérisé en ce que** la poutre porteuse est configurée avec un tube en plastique (6, 7) en tant que structure portante, le tube étant renforcé avec des entretoises supérieures et inférieures (8, 9) s'étendant longitudinalement, et étant relié à l'articulation à charnière (4b).

2. Système de tringlerie pour épandeurs à patins ou à pendillards pour l'épandage de lisier, le système pouvant être monté sur un véhicule tonneau à lisier et présentant deux parties de bras (4c) qui peuvent pivoter autour d'une articulation à charnière (4b) entre une position de transport repliée sur le véhicule tonneau à lisier et une position de travail dépliée vers les côtés, et qui respectivement présentent une poutre porteuse (6, 7, 8, 9) et, disposés sur celle-ci, une pluralité de patins (5), chacun avec la portion terminale d'un tuyau d'épandage de lisier associé (12), ou une pluralité de pendillards,
**caractérisé en ce que** la poutre porteuse est configurée avec un tube en plastique (13) en tant que structure portante, le tube étant renforcé dans sa région inférieure avec une nervure (14) en matière plastique renforcée de fibres de verre qui s'étend longitudinalement, la matière plastique étant repliée, pour former la nervure, sur elle-même sous forme d'une couche de matière plastique renforcée de fibres de verre (15) et s'étendant des deux côtés de la nervure (14) sur une certaine partie de la périphérie autour du tube en plastique (13).

3. Système de tringlerie selon la revendication 2, dans lequel les patins ou les pendillards sont montés sur la nervure.

4. Système de tringlerie selon la revendication 2 ou 3, dans lequel la couche de matière plastique renforcée de fibres de verres (15) s'étend sur au moins la moitié de la circonférence ou sur toute la circonférence du tube en plastique (13).

5. Système de tringlerie selon la revendication 1, dans lequel les patins (5) ou les pendillards sont montés sur l'entretoise inférieure (8, 9) qui s'étend longitudinalement.

6. Système de tringlerie selon l'une quelconque des revendications 1 à 5, dans lequel les tuyaux d'épandage de lisier (12) passent au moins partiellement à l'intérieur du tube en plastique (6, 7, 13).

7. Système de tringlerie selon la revendication 6, dans lequel les tuyaux d'épandage de lisier sortent à travers des ouvertures de passages disposées le long du tube en plastique (6, 7, 13) vers les positions respectives des patins ou pendillards.

8. Système de tringlerie selon l'une quelconque des revendications 1 à 7, dans lequel la poutre porteuse présente, en tant que structure portante, un tube en plastique (6) de plus grand diamètre dans une portion contiguë à l'articulation à charnière (4b), et, dans une portion extérieure contiguë à celle-ci, un tube en plastique (7) de plus petit diamètre.

9. Système de tringlerie selon l'une quelconque des revendications 1 à 8, dans lequel en cours de la longueur de la poutre porteuse est disposé un collecteur de distribution (10) qui est fourni d'une pluralité de raccords de tuyau pour les tuyaux d'épandage de lisier (12) et qui répartit le lisier acheminé par une ligne d'alimentation sur les tuyaux d'épandage de lisier (12).

10. Système de tringlerie selon les revendications 8 et 9, dans lequel le collecteur de distribution (10) est disposé dans un écart entre le tube en plastique (6) de plus grand diamètre et le tube en plastique (7) de plus petit diamètre.

11. Système de tringlerie selon la revendication 9, dans lequel un tube d'alimentation (11) vers le collecteur de distribution (10) passe à travers le tube en plastique (6) de plus grand diamètre.

12. Système de tringlerie selon l'une quelconque des revendications 8 à 11, dans lequel la portion de poutre porteuse avec le tube en plastique (6) de plus grand diamètre et la portion de poutre porteuse avec le tube en plastique (7) de plus petit diamètre sont reliées et repliables entre elles par une articulation à charnière.

13. Système de tringlerie selon l'une quelconque des revendications 1 à 12, dans lequel l'intérieur de tube du ou de chaque tube en plastique est rempli de mousse plastique.
